# EUROPÄISCHE PATENTSCHRIFT

(11) **EP 2 240 690 B1**
(45) Veröffentlichungstag und Bekanntmachung des Hinweises auf die Patenterteilung: **09.01.2013**
(21) Anmeldenummer: 08870362.4
(22) Anmeldetag: 25.11.2008
(51) Int. Cl.: F04B 1/04, F04B 53/14

(54) **HYDRAULIKFLUIDPUMPE MIT EINEM DICHTELEMENT**
HYDRAULIC FLUID PUMP HAVING A SEALING ELEMENT
POMPE À FLUIDE HYDRAULIQUE COMPRENANT UN ÉLÉMENT D'ÉTANCHÉITÉ

(30) Priorität: 08.01.2008 DE 102008003454
(43) Veröffentlichungstag der Anmeldung: 20.10.2010
(73) Patentinhaber: Robert Bosch GmbH, 70442 Stuttgart (DE)
(72) Erfinder: FELLMETH, Reiner, 74354 Besigheim (DE)
(86) Internationale Anmeldenummer: PCT/EP2008/066115
(87) Internationale Veröffentlichungsnummer: WO 2009/086988

(56) Entgegenhaltungen:
- DE-A1- 4 205 122
- DE-A1- 19 752 546
- DE-B1- 1 266 589
- US-A- 4 773 305
- US-B1- 6 338 295

## Beschreibung

### Stand der Technik

Die Erfindung betrifft eine Hydraulikfluidpumpe, insbesondere einer Fahrzeugbremsanlage, mit einem Gehäuse, einem in dem Gehäuse in einem Kolbenraum axial verschiebbar gelagertem Kolben, einem den Kolben bewegenden Antrieb und einem den Kolbenraum zum Antrieb hin abdichtenden Dichtelement, gemäß dem Oberbegriff von Anspruch 1. Ferner betrifft die Erfindung eine Fahrzeugbremsanlage mit einer derartigen Hydraulikfluidpumpe.

Solch eine Hydraulikfluidpumpe einer Fahrzeugbremsanlage ist z.B. aus dem Dokument DE 197 52 546 A1 bekannt.

Bei bekannten Hydraulikfluidpumpen von Fahrzeugbremsanlagen, wie sie beispielsweise zum Rückfördern von Hydraulikfluid während einer Funktion als Antiblockiersystem verwendet werden, sind Pumpengehäuse ausgebildet, in denen in der Regel zwei Kolben verschiebbar gelagert sind. Jeder der Kolben ist einem Bremskreis zugeordnet. Die Kolben werden mittels eines einzigen Exzenterantriebs axial hin und her verschoben und es wird auf diese Weise in einen vor dem Kolben ausgebildeten Druckraum Hydraulikfluid eingesaugt und aus diesem herausgefödert. Der Druckraum ist dabei von einer eigenen Gehäusehülle bzw. einem Zylinder umgeben, der auch kolbenseitig abgedichtet ist. Ein Zylinder und ein Kolben bilder ein so genanntes Pumpenelement, welches in dem Gehäuse in einer Stufenbohrung eingesetzt und oftmals von außen verpresst ist. Der Kolben ragt dabei in das Gehäuse weiter in einen Bereich hinein, in dem sich am Ende der Exzenterantrieb befindet. In diesem Bereich, der h er als Kolbenraum bezeichnet wird, ist auch die Zuleitung von Hydraulikfluid in den Zylinder hinein ausgebildet. Der zwischen dem Kolben und dem Gehäuse dabei grundsätzlich bestehende Ringspalt muss mittels eines Dichtelements in Form eines Dichtrings abgedichtet sein. Der Dichtring dichtet also zwischen der so genannten Niederdruckseite des Kolbens und einem zum Exzenterantrieb gehörenden Exzenterraum ab.

Die dabei verwendeten Dichtringe, so genannte O-Ringe oder Q-Ringe sind meist aus EPDM (Ethylen-Propylen-Dien-Kautschuk) hergestellt und weisen grundsätzlich ein vergleichsweise gutes Dichtungsverhalten auf. Durch eine Relativbewegung zwischen dem Kolben und dem Dichtring kommt es jedoch bei den derzeit bekannten Konstruktionen dennoch zu einer Schleppleckage von Hydraulikfluid bzw. Bremsflüssigkeit in den Exzenterraum des Exzenterantriebs. Bei einer erhöhten Leckage in den Exzenterraum kann das Bremsfluid auch in den Motor des Exzenterantriebs gelangen, was unter Umständen zu dessen Schädigung und/oder Ausfall führen kann.

Es ist eine Aufgabe der vorliegenden Erfindung eine Fahrzeugbremsanlage mit einer Hydraulikfluidpumpe zu schaffen, bei der die oben genannten Nachteile überwunden sind und insbesondere eine Leckage von Hydraulikfluid in den Exzenterraum der Hydraulikfluidpumpe noch besser verhindert ist, als dies bei bekannten Hydraulikfluidpumpen der Fall ist.

### Offenbarung der Erfindung

Die Aufgabe ist erfindungsgemäß mit einer Hydraulikfluidpumpe gemäß Anspruch 1, und einer Fahrzeugbremsanlage gemäß Anspruch 5 gelöst. Vorteilhafte Weiterbildungen der erfindungsgemäßen Lösung sind in den abhängigen Ansprüchen beschrieben.

Erfindungsgemäß ist eine Hydraulikfluidpumpe, insbesondere einer Fahrzeugbremsanlage mit einem Gehäuse, einem in dem Gehäuse in einem Kolbenraum axial verschiebbar gelagertem Kolben, einem den Kolben bewegenden Antrieb und einem den Kolbenraum zum Antrieb hin abdichtenden Dichtelement gestaltet, bei dem das Dichtelement als eine Membran gestaltet ist, welche den Kolbenraum quer zur Bewegungsrichtung des Kolbens durchsetzt. Ferner ist die Aufgabe mit einer Fahrzeugbremsanlage mit einer derartigen Hydraulikfluidpumpe gelöst. Darüber hinaus ist die Aufgabe mit einem Dichtelement einer Hydraulikfluidpump gelöst, das zum Einsetzen in einen Kolbenraum eines Gehäuses der Hydraulikfluidpumpe vorgesehen ist, in dem ein Kolben axial verschiebbar gelagert ist, der mittels eines Antriebs bewegbar ist, und das als eine Membran gestaltet ist, welche im in dem Gehäuse eingesetzten Zustand den Kolbenraum quer zur Bewegungsrichtung des Kolbens durchsetzt.

### Vorteile der Erfindung

Erfindungsgemäß ist mit Hilfe einer Membran eine vollständige Abdichtung des hydraulischen Bereichs einer Hydraulikfluidpumpe von deren Antriebsbereich geschaffen. Es ist dazu erfindungsgemäß in dem Kolbenraum, in dem der Kolben der Hydraulikfluidpumpe axial verschiebbar angeordnet ist, ein den Kolbenraum quer zur Bewegungsrichtung des Kolbens durchsetzende Membran bzw. ein Diaphragma angeordnet. Die Axialbewegung des Kolbens, welche bevorzugt ca. 2 mm beträgt, wird erfindungsgemäß durch eine Elastizität der Membrane ermöglicht. Die erfindungsgemäße Membran kann dazu besonders vorteilhaft zumindest abschnittsweise die Form eines Balges aufweisen.

Mit der erfindungsgemäß geschaffenen kompletten Abdichtung zwischen dem Hydraulikbereich und dem Antriebsbereich der Hydraulikfluidpumpe insbesondere einer Fahrzeugbremsanlage kann insbesondere kein Hydraulikfluid bzw. keine Bremsflüssigkeit in den Antrieb bereich der Hydraulikfluidpumpe, den dort angeordneten Exzenter sowie den sich dort befindenden Elektromotor eindringen. Eine sonst mögliche Beschädigung des Elektromotors ist dadurch verhindert und die Gefahr eines Ausfalls des gesamten zugehörigen Fahrzeugbremsystems erheblich vermindert.

Die erfindungsgemäß vorgesehene Membran ist besonders bevorzugt am Gehäuse ortsfest angebracht. Dabei ist die Membran besonders vorteilhaft an dem Gehäuse in einer Nut eingesetzt, wodurch eine formschlüssige Verbindung zwischen Gehäuse und Membran erzeugt und dadurch eine dauerhaft unveränderte Lage der Membran über die gesamte Betriebszeit der erfindungsgemäßen Hydraulikfluidpumpe gewährleistet ist. Darüber hinaus lässt sich die erfindungsgemäße Membran in eine derartige Nut bei ihrer Montage besonders leicht einsetzen und lagegenau fixieren.

Bei der erfindungsgemäßen Hydraulikfluidpumpe ist ferner deren Kolben bevorzugt zweiteilig gestaltet, wobei dann die erfindungsgemäße Membran zwischen den beiden Teilen des Kolbens angeordnet ist.

Zwischen der derart angeordneten Membran und den zugehörigen Kolbenteilen kann eine Zugkraft-übertragende Verbindung ausgebildet sein. Alternativ kann die Verbindung nur Druckkraft-übertragend gestaltet sein, insbesondere indem die Kolbenteile an der Membran nur anliegen, was beispielsweise durch eine federnde Vorspannung der beiden Kolbenteile des Kolbens in Richtung auf den zugehörigen Antrieb gewährleistet werden kann. Es ist daher erfindungsgemäß ferner bevorzugt, den Kolben der Hydraulikfluidpumpe gegen den Antrieb federnd vorzuspannen.

### Kurze Beschreibung der Zeichnungen

Nachfolgend wird ein Ausführungsbeispiel der erfindungsgemäßen Lösung anhand der beigefügten schematischen Zeichnungen näher erläutert. Es zeigt:
Fig. 1 einen Längsschnitt eines Ausführungsbeispiels einer Hydraulikfluidpumpe gemäß dem Stand der Technik und
Fig. 2 einen Längsschnitt eines Ausführungsbeispiels einer Hydraulikfluidpumpe gemäß der Erfindung.

### Ausführungsform(en) der Erfindung

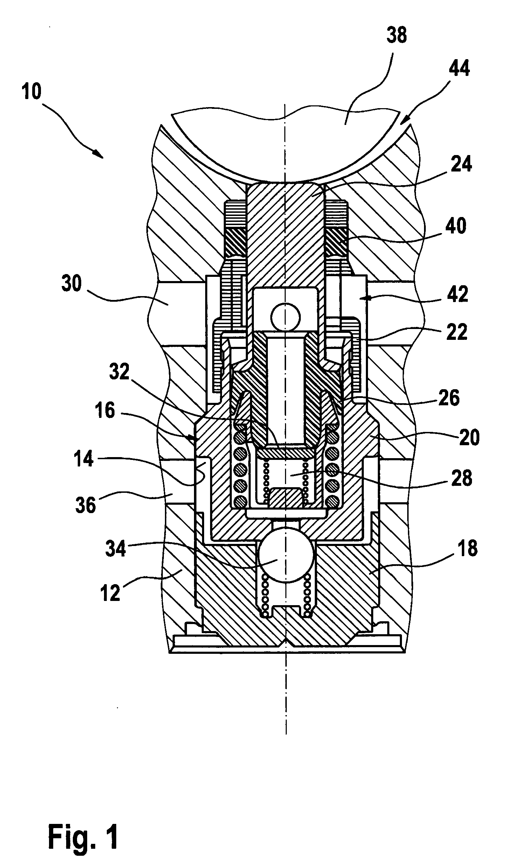

In Fig. 1 ist eine Hydraulikfluidpumpe 10 veranschaulicht, die in einem blockförmigen Gehäuse 12 eines weiter nicht veranschaulichten Hydroaggregats einer Fahrzeugbremsanlage angeordnet ist. Das Hydroaggregat gewährleistet an Fahrzeugbremsen eines zugehörigen Fahrzeugs insbesondere eine Antiblockier- und eine Antischlupf-Funktion (ABS und ASR).

In dem Gehäuse 12 ist eine gestufte Bohrung 14 ausgebildet, in der das eigentliche Pumpenelement 16 der Hydraulikfluidpumpe 10 angeordnet ist. Das Pumpenelement 16 weist dabei drei Gehäuse- bzw. Zylinderelemente 18, 20 und 22 auf, die einen Kolben 24 umgeben und zusammen mit einem Teil des Gehäuses 12 für den Kolben 24 einen Zylinder bilden. In dem derartigen Zylinder ist der Kolben 24 mit einer Kolbendichtung 26 gegenüber einem Druckraum 28 abgedichtet und dabei in der Axialrichtung des Kolbens 24 verschiebbar.

Beim Verschieben des Kolbens 24 saugt dieser durch einen Einlass 30 und ein Einlassventil 32 ein (weiter nicht dargestelltes) Hydraulikfluid in den Druckraum 28 und fördert dieses durch ein Auslassventil 34 und einen Auslass 36 auch wieder aus dem Druckraum 28 heraus. Der Kolben 24 wird dabei in der gestuften Bohrung 14 in einem von einem Exzenterantrieb 38 bewegt.

Um die hydraulische Seite der derartigen Hydraulikfluidpumpe 10 gegenüber der mechanischen bzw. elektrischen Seite ihres Antriebs abzugrenzen, ist ein Dichtring 40 vorgesehet. Dieser Dichtring 40 umgibt den Kolben 24 und dichtet den Einlass 30, die so genannte Niederdruckseite bzw. den Kolbenraum 42 des Pumpenelements 16, gegenüber dem Exzenterantrieb 38 und einem dortigen Exzenterraum 44 ab. Der Dichtring 40 wird daher auch als so genannter Niederdruck-Dichtelement bezeichnet.

Der Dichtring 40 ist dazu ortsfest in der gestuften Bohrung 14 des Gehäuses 12 angeordnet und der Kolben 24 bewegt sich bei seiner Pumpbewegung gegenüber dem Druckraum 28 an dem Dichtring 40 entlang. Bei dieser Relativbewegung zwischen Dichtring 40 und Kolben 24 kann es zu Schleppleckage von Hydraulikfluid kommen, wodurch Hydraulikfluid in den Exzenterraum 44 gelangen und es zu einer Schädigung insbesondere eines (nicht dargestellten) Motors des Exzenterantriebs 38 kommen kann.

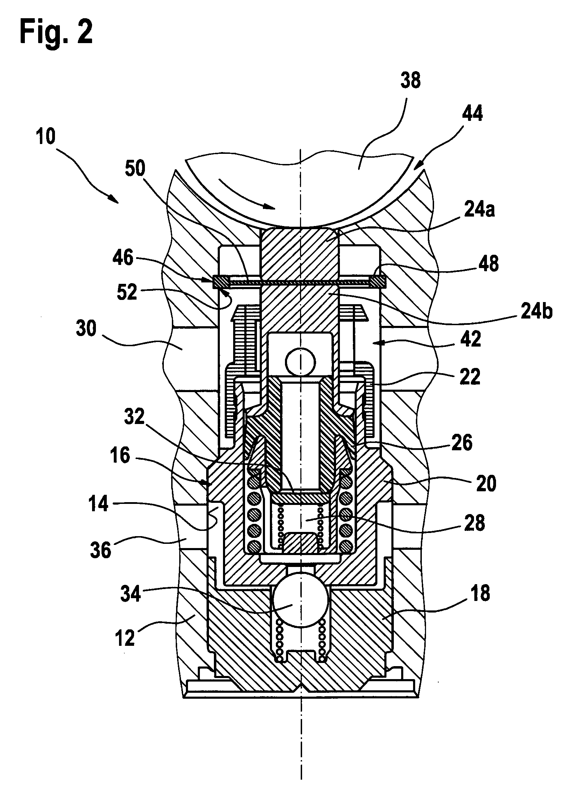

In Fig. 2 ist eine erfindungsgemäße Hydraulikfluidpumpe 10 veranschaulicht, welche im Hinblick auf die Bauelemente 12 bis 38 im wesentlichen gleich gestaltet ist, wie die Hydraulikfluidpumpe 10 des Standes der Technik gemäß Fig. 1.

Bei der Hydraulikfluidpumpe 10 gemäß Fig. 2 ist jedoch als Niederdruck-Dichtelement in der gestuften Bohrung 14 des Gehäuses 12 eine Membran 46 eingesetzt, die den Kolben traum 42 quer zur Bewegungsrichtung des Kolbens 24 durchsetzt. Der Kolben 24 ist dabei zweiteilig gestaltet, wobei ein Kolbenteil 24a am Exzenterantrieb 38 anliegt und bis zur Membran 46 reicht und das zweite Kolbenteil 24b von der Membran 46 bis in den Druckraum 28 reicht.

Die Membran 46 iat am Gehäuse 12 derart ortsfest angeordnet und elastisch gestaltet ist, dass ein Axialhub des Kolbens 24 bzw. der Kolbenteile 24a und 24b relativ zum Gehäuse 12 möglich ist.

Die Membran 46 weist dazu einen radial äußeren Randbereich 48 auf, der an dem Gehäuse 12 ortsfest gehaltert. Radial innen von dem Randbereich 48 ist die Membran 46 mit einem elastischen Innenbereich 50 gestaltet, der auch als Diaphragma bezeichnet wird. D eser Innebreich 50 kann wie dargestellt im Querschnitt linear sein und/oder wellenförmige Abschnitte aufweisen.

Zur ortsfesten Anbringung der Membran 46 am Gehäuse 12 ist in diesem eine (Um fangs-) Nut 52 ausgebildet.

Die derartige Membraun 46 führt zu einer hermetischen Trennung der Niederdruck seite bzw. des Kolbenraums 42 vom Exzenterraum 44 an der erfindungsgemäßen Hydraulikfluidpumpe 10 gemäß Fig. 2 und unterbindet damit jegliche mögliche Lecktage von Hydraulikfluid in den Exzenterraum 44.

## Patentansprüche

1. Hydraulikfluidpumpe (10), insbesondere einer Fahrzeugbremsanlage, mit einem Gehäuse (12), einem in dem Gehäuse (12) in einem Kolbenraum (42) axial verschiebbar gelagerten Kolben (24), der zwischen einer mit einem Einlass (30) verbundenen Niederdruckseite und einem mit einem Auslass verbundenen Druckraum (28) des Kolbenraums (42) abgedichtet geführt ist, einem den Kolben (24) bewegenden Antrieb (38) und einem die Niederdruckseite des Kolbenraums (42) zum Antrieb (38) hin abdichtenden Dichtelement (40; 46), **dadurch gekennzeichnet**,
das Dichtelement (40; 46) als eine, Membran (46) gestaltet ist, welche den Kolbenraum (42) quer zur Bewegungsrichtung des Kolbens (24) durchsetzt und die Axialbewegung des Kolbens (24) durch ihre Elastizität ermöglicht, dass die Membran (46) zwischen zwei Teilen (24a, 24b) des Kolbens (24) angeordnet ist, wobei ein erstes Kolbenteil (24a) mit dem Antrieb (38) der Hydraulikfluidpumpe zusammenwirkt und an einem zweiten Kolbenteil (24b) ein den Einlass (30) der Hydraulikfluidpumpe steuerndes Einlassventil (32) angeordnet ist.

2. Hydraulikfluidpumpe nach Anspruch 1,
bei der die Membran (46) am Gehäuse (12) ortsfest angebracht ist.

3. Hydraulikfluidpumpe nach Anspruch 2,
bei der die Membran (46) am Gehäuse (12) in eine Nut (52) eingesetzt ist.

4. Hydraulikfluidpumpe nach Anspruch 1,
bei der der Kolben (24) gegen den Antrieb (38) federnd vorgespannt ist.

5. Fahrzeugbremsanlage mit einer Hydraulikfluidpumpe (10) nach einem der Ansprüche 1 bis 4.

## Claims

1. Hydraulic fluid pump (10), in particular of a vehicle brake system, having a housing (12), a piston (24) which is mounted axially displaceably in the housing (12) in a piston space (42) and is guided in a sealed manner between a low pressure side which is connected to an inlet (30) and a pressure space (28) of the piston space (42), which pressure space (28) is connected to an outlet, a drive (38) which moves the piston (24) and a sealing element (40; 46) which seals the low pressure side of the piston space (42) in the direction of the drive (38), **characterized in that** the sealing element (40; 46) is designed as a diaphragm (46) which crosses the piston space (42) transversely with respect to the movement direction of the piston (24) and, as a result of its elasticity, makes the axial movement of the piston (24) possible, **in that** the diaphragm (46) is arranged between two parts (24a, 24b) of the piston (24), a first piston part (24a) interacting with the drive (38) of the hydraulic fluid pump, and an inlet valve (32) which controls the inlet (30) of the hydraulic fluid pump being arranged on a second piston part (24b).

2. Hydraulic fluid pump according to Claim 1, in which the diaphragm (46) is attached to the housing (12) in a stationary manner.

3. Hydraulic fluid pump according to Claim 2, in which the diaphragm (46) is inserted into a groove (52) on the housing (12).

4. Hydraulic fluid pump according to Claim 1, in which the piston (24) is prestressed resiliently against the drive (38).

5. Vehicle brake system having a hydraulic fluid pump (10) according to one of Claims 1 to 4.

## Revendications

1. Pompe à fluide hydraulique (10), en particulier d'un système de freinage de véhicule, comprenant un boîtier (12), un piston (24) monté de manière axialement coulissante dans une chambre de piston (42) dans le boîtier (12), lequel piston est guidé de manière étanche entre un côté basse pression raccordé à une entrée (30) et une chambre de pression (28) de la chambre de piston (42) raccordée à une sortie, un entraînement (38) déplaçant le piston (24) et un élément d'étanchéité (40 ; 46) rendant étanche le côté basse pression de la chambre de piston (42) en direction de l'entraînement (38), **caractérisée en ce que** l'élément d'étanchéité (40 ; 46) est configuré en tant que membrane (46) qui traverse la chambre de piston (42) transversalement par rapport à la direction de déplacement du piston (24) et qui, de par son élasticité, rend possible le déplacement axial du piston (24), et **en ce que** la membrane (46) est disposée entre deux parties (24a, 24b) du piston (24), une première partie de piston (24a) coopérant avec l'entraînement (38) de la pompe à fluide hydraulique et une soupape d'entrée (32) commandant l'entrée (30) de la pompe à fluide hydraulique étant disposée sur une deuxième partie de piston (24b).

2. Pompe à fluide hydraulique selon la revendication 1,
dans laquelle la membrane (46) est montée de manière fixe sur le boîtier (12).

3. Pompe à fluide hydraulique selon la revendication 2,
dans laquelle la membrane (46) est insérée dans une rainure (52) sur le boîtier (12).

4. Pompe à fluide hydraulique selon la revendication 1,
dans laquelle le piston (24) est précontraint de manière élastique contre l'entraînement (38).

5. Système de freinage de véhicule comprenant une pompe à fluide hydraulique (10) selon l'une quelconque des revendications 1 à 4.
